(19) Europäisches Patentamt
European Patent Office
Office européen des brevets

(11) EP 4 316 685 A1

(12) EUROPEAN PATENT APPLICATION
published in accordance with Art. 153(4) EPC

(43) Date of publication:
07.02.2024 Bulletin 2024/06

(51) International Patent Classification (IPC):
B21D 28/02 (2006.01)   C21D 8/12 (2006.01)
H02K 15/02 (2006.01)   C22C 38/00 (2006.01)
C22C 38/06 (2006.01)   H01F 1/147 (2006.01)

(21) Application number: 22781077.7

(22) Date of filing: 30.03.2022

(52) Cooperative Patent Classification (CPC):
B21D 28/02; C21D 8/12; C22C 38/00; C22C 38/06;
H01F 1/147; H02K 15/02

(86) International application number:
PCT/JP2022/015938

(87) International publication number:
WO 2022/210867 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.03.2021   JP 2021061846
15.06.2021   JP 2021099782

(71) Applicant: NIPPON STEEL CORPORATION
Chiyoda-ku
Tokyo 100-8071 (JP)

(72) Inventors:
• WAKISAKA, Takeaki
Tokyo 100-8071 (JP)
• NATORI, Yoshiaki
Tokyo 100-8071 (JP)

(74) Representative: Vossius & Partner
Patentanwälte Rechtsanwälte mbB
Siebertstraße 3
81675 München (DE)

(54) **NON-ORIENTED ELECTRICAL STEEL SHEET, METHOD FOR PUNCHING NON-ORIENTED ELECTRICAL STEEL SHEET, AND DIE FOR PUNCHING NON-ORIENTED ELECTRICAL STEEL SHEET**

(57)     This non-grain-oriented electrical steel sheet is a non-grain-oriented electrical steel sheet including a silicon steel sheet as a base material, wherein the silicon steel sheet has a predetermined mechanical property depending on a direction with respect to a rolling direction, and the difference between a maximum value and a minimum value of diameters of circular holes after punching with a substantially circular die is 0.20% or less of the average value of the maximum value and the minimum value.

FIG. 1

**Description**

[Technical Field]

The present invention relates to a non-grain-oriented electrical steel sheet, a method for punching a non-grain-oriented electrical steel sheet and a die for punching a non-grain-oriented electrical steel sheet.

Priority is claimed on Japanese Patent Application No. 2021-061846, filed March 31, 2021, and Japanese Patent Application No. 2021-099782, filed June 15, 2021, the content of which is incorporated herein by reference.

[Background Art]

In recent years, the demand for non-grain-oriented electrical steel sheets used as materials for motors and the like has increased due to an increased worldwide demand for electrical machines such as motors.

Patent Document 1 describes that, in a method for punching a non-grain-oriented electrical steel sheet to produce a motor core, the roundness of a cutting edge of a punching die is controlled according to an elongation rate of the non-grain-oriented electrical steel sheet.

[Citation List]

[Patent Document]

[Patent Document 1]
Japanese Unexamined Patent Application, First Publication No. H10-24333

[Summary of the Invention]

[Problems to be Solved by the Invention]

A non-grain-oriented electrical steel sheet used for a stator core of a motor is subjected to core annealing (strain relief annealing) in order to reduce the iron loss after the stator core is punched out with a die. Here, specifically, first, a rotor core is punched out from a non-grain-oriented electrical steel sheet, the inner diameter of the stator core is then punched, and the outer diameter of the stator core is then punched. When heat is applied to the stator core by core annealing, the residual stress and strain are released, and the iron loss is reduced. Here, the stator core is subjected to core annealing, but the rotor core is generally not subjected to annealing in order to increase the strength.

If the residual stress distribution in the stator core after the stator core is punched out with a die is non-uniform, the change in the shape of the stator core due to release of the residual stress during core annealing becomes non-uniform. Thereby, the high roundness of the inner diameter of the stator core obtained before core annealing may be reduced by core annealing. One of the factors that make the residual stress distribution non-uniform is, for example, the anisotropy of mechanical properties of the non-grain-oriented electrical steel sheet to be punched.

In the technology described in Patent Document 1, the roundness of the cutting edge of the punching die is controlled according to the elongation rate of the non-grain-oriented electrical steel sheet, the dimensional accuracy of the non-grain-oriented electrical steel sheet after working is controlled according to the dimensions of the punching die, but it is not assumed to control the roundness in consideration of the anisotropy of mechanical properties of the non-grain-oriented electrical steel sheet. Therefore, the technology described in Patent Document 1 has a problem that it is not possible to minimize a decrease in dimensional accuracy due to the anisotropy of mechanical properties of the non-grain-oriented electrical steel sheet to be punched.

Here, an object of the present invention is to provide a non-grain-oriented electrical steel sheet that can minimize a decrease in dimensional accuracy after working and after core annealing. In addition, an object of the present invention is to provide a method for punching a non-grain-oriented electrical steel sheet and a die for punching a non-grain-oriented electrical steel sheet through which it is possible to minimize a decrease in dimensional accuracy after working and after core annealing.

[Means for Solving the Problem]

The gist of present disclosure is as follows.

(1) A non-grain-oriented electrical steel sheet according to one embodiment of the present invention is a non-grain-oriented electrical steel sheet including a silicon steel sheet as a base material, wherein the silicon steel sheet has a predetermined mechanical property depending on a direction with respect to a rolling direction, and wherein the difference between a maximum value and a minimum value of diameters of circular holes after punching with a substantially circular die is 0.20% or less of the average value of the maximum value and the minimum value.

(2) In the non-grain-oriented electrical steel sheet according to (1), the predetermined mechanical property may be the following Formula (1) being satisfied when the Young's modulus of the non-grain-oriented electrical steel sheet in the rolling direction is defined as E0, the Young's modulus in the direction perpendicular to the rolling direction is defined as E90, and the Young's modulus in the direction 45 degrees from the rolling direction is defined as E45.

$$0.8100 \leq (E0+E90)/(2 \times E45) \leq 1.0000 \ldots (1)$$

(3) In the non-grain-oriented electrical steel sheet according to (1) or (2), the predetermined mechanical property may be the following Formula (2) being satisfied when the r value of the silicon steel sheet in the rolling direction is defined as r0, the r value in the direction perpendicular to the rolling direction is defined as r90, and the r value in the direction 45 degrees from the rolling direction is defined as r45.

$$1.0000 \leq (r0+r90)/(2 \times r45) \leq 1.3100 \ldots (2)$$

(4) In the non-grain-oriented electrical steel sheet according to any one of (1) to (3), the predetermined mechanical property may be the following Formula (3) being satisfied when the n value of the silicon steel sheet in the rolling direction is defined as n0, the n value in the direction perpendicular to the rolling direction is defined as n90, and the n value in the direction 45 degrees from the rolling direction is defined as n45.

$$0.8100 \leq (n0+n90)/(2 \times n45) \leq 1.0000 \ldots (3)$$

(5) In the non-grain-oriented electrical steel sheet according to any one of (1) to (4), the predetermined mechanical property may be the following Formula (4) being satisfied when the yield ratio of the silicon steel sheet in the rolling direction is defined as YR0, the yield ratio in the direction perpendicular to the rolling direction is defined as YR90, and the yield ratio in the direction 45 degrees from the rolling direction is defined as YR45.

$$0.8300 \leq (YR0+YR90)/(2 \times YR45) \leq 1.0300 \ldots (4)$$

(6) In the non-grain-oriented electrical steel sheet according to any one of (1) to (5), the base material has a chemical composition that may include, in mass%,

C: 0.0010 to 0.0040%,
Si: 2.5 to 4.5%,
Al: 0.2 to 2.5%,
Mn: 0.1 to 3.5%,
P: more than 0% and 0.10% or less,
S: 0 to 0.0030%,
N: 0 to 0.0030%,
Ti: 0 to 0.0030%,
Mo: 0.0010 to 0.10%,
Cr: 0 to 0.10%,
B: 0 to 0.0010%,
Ni: 0 to 0.50%,
Cu: 0 to 0.50%,
Sn: 0 to 0.20%,
Sb: 0 to 0.20%,
Ca: 0 to 0.0050%,
La: 0 to 0.0050%,
Ce: 0 to 0.0050%,
O: 0 to 0.10%,
V: 0 to 0.10%,

W: 0 to 0.10%,
Zr: 0 to 0.10%,
Nb: 0 to 0.10%,
Mg: 0 to 0.10%,
Bi: 0 to 0.10%,
Nd: 0 to 0.10%, and
Y: 0 to 0.10%
with the remainder being made up of Fe and impurities.

(7) A method for punching a non-grain-oriented electrical steel sheet according to another embodiment of the present invention is a method for punching a non-grain-oriented electrical steel sheet including a silicon steel sheet as a base material using a substantially cylindrical die, including, based on a mechanical property value of the silicon steel sheet corresponding to a direction with respect to a rolling direction of the silicon steel sheet, determining the diameter of the die in the direction with respect to the rolling direction and punching out the silicon steel sheet.

(8) In the method for punching a non-grain-oriented electrical steel sheet according to (7), when the Young's modulus of the silicon steel sheet in the rolling direction is defined as E0, the Young's modulus in the direction perpendicular to the rolling direction is defined as E90, the Young's modulus in the direction 45 degrees from the rolling direction is defined as E45, and Eave=(E0+2×E45+E90)/4 is defined, the following Formula (5) may be satisfied when the target diameter of the outer circumference circle of the punched product after punching with the die is D and the diameter of the die is Di:

$$0.96 < (Ei/Eave) \times (Di/D) \leq 1.04 \ \ldots(5)$$

where, in Formula (5), i=0, 45, 90, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

(9) In the method for punching a non-grain-oriented electrical steel sheet according to (7), when the r value of the silicon steel sheet in the rolling direction is defined as r0, the r value in the direction perpendicular to the rolling direction is defined as r90, the r value in the direction 45 degrees from the rolling direction is defined as r45, and rave=(r0+2×r45+r90)/4 is defined, the following Formula (6) may be satisfied when the target diameter of the outer circumference circle of the punched product after punching with the die is D and the diameter of the die is Di:

$$0.96 < (ri/rave) \times (Di/D) \leq 1.04 \ \ldots(6)$$

where, in Formula (6), i=0, 45, 90, D0 is the diameter of the die corresponding to the rolling direction, D45 is the diameter of the die in the direction 45 degrees from the rolling direction, and D90 is the diameter of the die corresponding to the direction perpendicular to the rolling direction.

(10) In the method for punching a non-grain-oriented electrical steel sheet according to (7), when the n value of the silicon steel sheet in the rolling direction is defined as n0, the n value in the direction perpendicular to the rolling direction is defined as n90, the n value in the direction 45 degrees from the rolling direction is defined as n45, and nave=(n0+2×n45+n90)/4 is defined, the following Formula (7) may be satisfied when the target diameter of the outer circumference circle of the punched product after punching with the die is D and the diameter of the die is Di:

$$0.96 < (ni/nave) \times (Di/D) \leq 1.04 \ \ldots(7)$$

where, in Formula (7), i=0, 45, 90, D0 is the diameter of the die in the rolling direction, D45 is the diameter of the die corresponding to the direction 45 degrees from the rolling direction, and D90 is the diameter of the die corresponding to the direction perpendicular to the rolling direction.

(11) In the method for punching a non-grain-oriented electrical steel sheet according to (7), when the yield ratio of the silicon steel sheet in the rolling direction is defined as YR0, the yield ratio in the direction perpendicular to the rolling direction is defined as YR90, the yield ratio in the direction 45 degrees from the rolling direction is defined as YR45, and YRave=(YR0+2×YR45+YR90)/4 is defined, the following Formula (8) may be satisfied when the target diameter of the outer circumference circle of the punched product after punching with the die is D and the diameter of the die is Di:

$$0.96 \leq (YRi/YRave) \times (Di/D) \leq 1.04 \ldots(8)$$

where, in Formula (8), i=0, 45, 90, D0 is the diameter of the die in the rolling direction, D45 is the diameter of the die corresponding to the direction 45 degrees from the rolling direction, and D90 is the diameter of the die corresponding to the direction perpendicular to the rolling direction.

(12) In the method for punching a non-grain-oriented electrical steel sheet according to any one of (7) to (11), the base material has a chemical composition that may include, in mass%,

C: 0.0010 to 0.0040%,
Si: 2.5 to 4.5%,
Al: 0.2 to 2.5%,
Mn: 0.1 to 3.5%,
P: more than 0% and 0.10% or less,
S: 0 to 0.0030%,
N: 0 to 0.0030%,
Ti: 0 to 0.0030%,
Mo: 0.0010 to 0.10%,
Cr: 0 to 0.10%,
B: 0 to 0.0010%,
Ni: 0 to 0.50%,
Cu: 0 to 0.50%,
Sn: 0 to 0.20%,
Sb: 0 to 0.20%,
Ca: 0 to 0.0050%,
La: 0 to 0.0050%,
Ce: 0 to 0.0050%,
O: 0 to 0.10%,
V: 0 to 0.10%,
W: 0 to 0.10%,
Zr: 0 to 0.10%,
Nb: 0 to 0.10%,
Mg: 0 to 0.10%,
Bi: 0 to 0.10%,
Nd: 0 to 0.10%, and
Y: 0 to 0.10%

with the remainder being made up of Fe and impurities.

(13) A die for punching a non-grain-oriented electrical steel sheet according to still another embodiment of the present invention is a substantially columnar die for punching a non-grain-oriented electrical steel sheet including a silicon steel sheet as a base material,
wherein the diameter of the die in a direction with respect to a rolling direction of the silicon steel sheet is determined based on a mechanical property value of the silicon steel sheet corresponding to the direction with respect to the rolling direction.

(14) In the die for punching a non-grain-oriented electrical steel sheet according to (13), when the Young's modulus of the silicon steel sheet in the rolling direction is defined as E0, the Young's modulus in the direction perpendicular to the rolling direction is defined as E90, the Young's modulus in the direction 45 degrees from the rolling direction is defined as E45, and Eave=(E0+2×E45+E90)/4 is defined, the following Formula (5) may be satisfied when the target diameter of the outer circumference circle of the punched product after punching with the die is D and the diameter of the die is Di:

$$0.96 < (Ei/Eave) \times (Di/D) \leq 1.04 \ldots(5)$$

where, in Formula (5), i=0, 45, 90, and when the non-grain-oriented electrical steel sheet is placed in the die, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

(15) In the die for punching a non-grain-oriented electrical steel sheet according to (13), when the r value of the silicon steel sheet in the rolling direction is defined as r0, the r value in the direction perpendicular to the rolling direction is defined as r90, the r value in the direction 45 degrees from the rolling direction is defined as r45, and rave=(r0+2×r45+r90)/4 is defined, the following Formula (6) may be satisfied when the target diameter of the outer circumference circle of the punched product after punching with the die is D and the diameter of the die is Di:

$$0.96 < (ri/rave) \times (Di/D) \leq 1.04 \ldots (6)$$

where, in Formula (6), i=0, 45, 90, and when the non-grain-oriented electrical steel sheet is placed in the die, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

(16) In the die for punching a non-grain-oriented electrical steel sheet according to (13), when the n value of the silicon steel sheet in the rolling direction is defined as n0, the n value in the direction perpendicular to the rolling direction is defined as n90, the n value in the direction 45 degrees from the rolling direction is defined as n45, and nave=(n0+2×n45+n90)/4 is defined, the following Formula (7) may be satisfied when the target diameter of the outer circumference circle of the punched product after punching with the die is D and the diameter of the die is Di:

$$0.96 < (ni/nave) \times (Di/D) \leq 1.04 \ldots (7)$$

where, in Formula (7), i=0, 45, 90, and when the non-grain-oriented electrical steel sheet is placed in the die, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

(17) In the die for punching a non-grain-oriented electrical steel sheet according to (13), when the yield ratio of the silicon steel sheet in the rolling direction is defined as YR0, the yield ratio in the direction perpendicular to the rolling direction is defined as YR90, the yield ratio in the direction 45 degrees from the rolling direction is defined as YR45, and YRave=(YR0+2×YR45+YR90)/4 is defined, the following Formula (8) may be satisfied when the target diameter of the outer circumference circle of the punched product after punching with the die is D and the diameter of the die is Di:

$$0.96 \leq (YRi/YRave) \times (Di/D) \leq 1.04 \ldots (8)$$

where, in Formula (8), i=0, 45, 90, and when the non-grain-oriented electrical steel sheet is placed in the die, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

(18) In the die for punching a non-grain-oriented electrical steel sheet according to any one of (13) to (17), the base material has a chemical composition that may include, in mass%,

C: 0.0010 to 0.0040%,
Si: 2.5 to 4.5%,
Al: 0.2 to 2.5%,
Mn: 0.1 to 3.5%,
P: more than 0% and 0.10% or less,
S: 0 to 0.0030%,
N: 0 to 0.0030%,
Ti: 0 to 0.0030%,
Mo: 0.0010 to 0.10%,
Cr: 0 to 0.10%,
B: 0 to 0.0010%,
Ni: 0 to 0.50%,
Cu: 0 to 0.50%,
Sn: 0 to 0.20%,
Sb: 0 to 0.20%,

Ca: 0 to 0.0050%,
La: 0 to 0.0050%,
Ce: 0 to 0.0050%,
O: 0 to 0.10%,
V: 0 to 0.10%,
W: 0 to 0.10%,
Zr: 0 to 0.10%,
Nb: 0 to 0.10%,
Mg: 0 to 0.10%,
Bi: 0 to 0.10%,
Nd: 0 to 0.10%, and
Y: 0 to 0.10%

with the remainder being made up of Fe and impurities.

[Effects of the Invention]

According to the above embodiment of the present invention, it is possible to provide a non-grain-oriented electrical steel sheet that can minimize a decrease in dimensional accuracy after working and after core annealing. In addition, according to the above embodiment of the present invention, it is possible to provide a method for punching a non-grain-oriented electrical steel sheet and a die for punching a non-grain-oriented electrical steel sheet through which it is possible to minimize a decrease in dimensional accuracy after working and after core annealing.

[Brief Description of Drawings]

Fig. 1 is a plan view showing a state in which a rotor core is inserted into a stator core.
Fig. 2 is a plan view for illustrating a state in which a non-grain-oriented electrical steel sheet constituting the stator core shown in Fig. 1 is sequentially punched out with a male die.

[Embodiment(s) for implementing the Invention]

Hereinafter, a method for punching a non-grain-oriented electrical steel sheet and a die for punching a non-grain-oriented electrical steel sheet according to one embodiment of the present invention will be described with reference to the drawings.

General processes for producing a non-grain-oriented electrical steel sheet include respective ironmaking, steelmaking, hot rolling, and cold rolling processes, and after these processes are performed in order, strain is removed during rolling according to annealing. When annealing is performed, a crystal structure that has been strained by processing is recovered or recrystallized (primary recrystallization), and the strain is released. In addition, crystal grains grow according to annealing. Here, annealing may be performed before cold rolling. In addition, cold rolling may be performed a plurality of times in a divided manner, and annealing and cold rolling may be repeated.

A non-grain-oriented electrical steel sheet used for a stator core is subjected to core annealing (strain relief annealing) in order to reduce the iron loss after the stator core is punched out with a die. When heat is applied by core annealing, the residual stress and strain are released, and the iron loss is reduced.

During core annealing, if the residual stress distribution in the stator core after the stator core is punched out with a die is non-uniform, the change in the shape of the stator core due to release of the residual stress becomes non-uniform. Thereby, the high roundness of the inner diameter of the stator core obtained before core annealing may be reduced by core annealing.

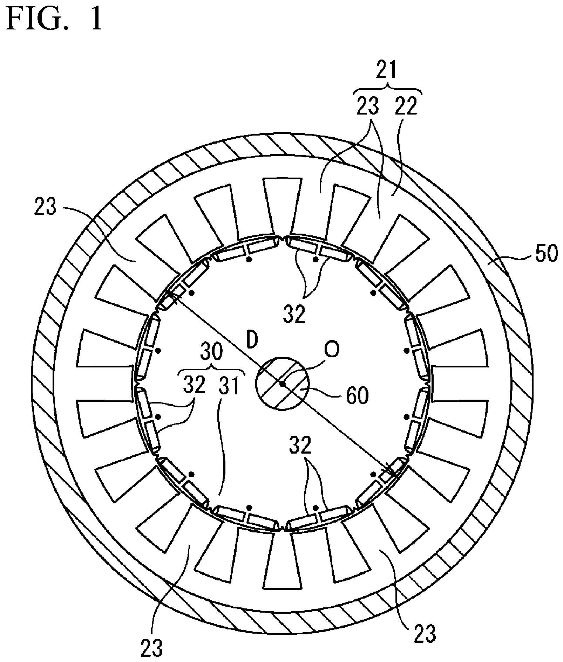

Fig. 1 is a plan view showing a state in which a rotor core is inserted into a stator core. In Fig. 1, a stator core 21 is constructed by laminating non-grain-oriented electrical steel sheets in a direction perpendicular to the paper surface and is composed of a core back 22 on the outer circumferential side and a plurality of teeth 23 protrudes inward from the core back 22. A rotor core 30 is inserted further inside than the tips of the teeth 23. The rotor core 30 includes a rotor core 31 and a plurality of magnets 32 that are provided on the outer circumferential side of the rotor core 31 and face the tips of the teeth 23. The outer circumference of the stator core 21 is held by a case 50. A shaft 60 penetrates through the center of the rotor core 31, and the shaft 60 is fixed to the rotor core 31. When a center O of the shaft 60 is aligned with the center of the inner diameter of the stator core 21, the shaft 60 is rotatably supported by the case 50 (or another fixing member) with the center O as the rotation axis.

In Fig. 1, the inner diameter of the stator core is specifically the inner diameter D of the tips of the teeth 23. When the roundness of the inner diameter D is reduced due to the change in the shape of the stator core 21 resulting from release of the residual stress described above, the gap between the tip of the teeth 23 and the rotor core 31 becomes non-uniform. Thereby, the cogging torque when the rotor core 30 rotates increases. An increase in cogging torque causes non-uniform rotation, vibration, noise and the like. In addition, when the roundness of the inner diameter of the stator core 21 is further reduced, problems such as the rotor core 31 of the rotor core 30 coming into contact with the tips of the teeth 23 may occur.

In JIS B 0621 (1984) "Definitions and expressions of geometrical deviations," "roundness is defined as the amount of deviation of a circular shape from a geometrically-correct circle." In addition, regarding the expression of the roundness, it is described that "the roundness is expressed as the radius difference of two circles when a circular object is interposed between two concentric geometric circles and the distance between two concentric circles is the smallest and is expressed as roundness_mm or roundness_$\mu$m."

In the present embodiment, as evaluation criteria for roundness, a ratio obtained by dividing the difference between the maximum value and the minimum value of the diameters of the circles by the average diameter is used. Here, the maximum value of the diameters of the circles is the diameter of the larger circle between the two concentric circles described in JIS B 0621 (1984), and the minimum value of the diameters of the circles is the diameter of the smaller circle between the two concentric circles. In addition, the average diameter is an average value of the maximum value and the minimum value of the diameters of circles. Therefore, the evaluation criteria for roundness of the present embodiment correspond to the ratio obtained by dividing the roundness, which is a difference in radii of two circles when the distance of two concentric circles described in JIS B 0621 (1984) is the smallest, by the average value of the radii of two circles.

If the ratio corresponding to the average diameter in the difference between the maximum value and the minimum value of the inner diameter D is more than 0.20%, the gap between the tip of the teeth 23 and the rotor core 31 becomes non-uniform, which causes non-uniform rotation, vibration, noise and the like. In addition, since problems such as the rotor core 31 of the rotor core 30 coming into contact with the tips of the teeth 23 occur, the ratio corresponding to the average diameter in the difference between the maximum value and the minimum value of the inner diameter D is 0.20% or less. The ratio is preferably 0.15% or less and more preferably 0.10% or less. Since a smaller ratio is more preferable, there is no lower limit.

One of the factors that make the residual stress distribution in the stator core non-uniform is, for example, the anisotropy of mechanical properties of the non-grain-oriented electrical steel sheet to be punched. If the anisotropy of mechanical properties is larger, residual stress release during core annealing differs depending on the direction. That is, if the anisotropy of mechanical properties of the non-grain-oriented electrical steel sheet to be punched is large, deformation (contraction) occurs in the stator core due to core annealing, and the amount of deformation differs depending on the direction of residual stress release. Therefore, even if the inner diameter of the stator core is punched into a perfect circle before core annealing, the roundness of the inner diameter of the stator core after core annealing decreases, and errors in motor production control increase.

In the present embodiment, the dimensions of the columnar die for stator core punching are determined according to the mechanical properties of the non-grain-oriented electrical steel sheet to be punched, that is, the anisotropy of the silicon steel sheet as a base material. As the mechanical properties, for example, at least one of the Young's modulus, the r value, the n value, and the yield ratio is focused upon. Since these property values have anisotropy whose value differs depending on the direction with respect to the rolling direction, the dimensions of the punching die for punching the inner diameter of the stator core are determined according to the anisotropy. Specifically, the diameter of the die in the direction with respect to the rolling direction of the silicon steel sheet is determined based on the mechanical property value of the silicon steel sheet depending on the direction with respect to the rolling direction of the silicon steel sheet. Thereby, it is possible to provide a motor core in which a decrease in the roundness after core annealing is minimized. This determination will be described below in detail.

Here, conventionally, a technology for increasing the roundness of the stator core after punching by improving the isotropy of the tensile strength (TS) among the mechanical properties of the non-grain-oriented electrical steel sheet has been known. However, even if the isotropy of the tensile strength is improved, the isotropy of other mechanical properties such as the Young's modulus does not increase accordingly, and there is room for improvement in terms of preventing a decrease in the roundness of the inner diameter of the stator core after core annealing. In addition, in order to produce a non-grain-oriented electrical steel sheet in which the isotropy of all mechanical properties including the Young's modulus of the steel sheet to be punched is improved, since very complex processes are required, the production cost excessively increases. In addition, when the texture of the non-grain-oriented electrical steel sheet is changed from the {111}-rich structure to the {100}- and/or {110}-rich structure in order to improve magnetic characteristics, the anisotropy of mechanical properties such as the Young's modulus expands. Therefore, in order to further increase the roundness of the stator core after punching, it is desirable to improve the punching method and the die to be used, assuming that the non-grain-oriented electrical steel sheet to be punched has anisotropy of mechanical properties. In the present embodiment, in view of such circumstances, according to the anisotropy of mechanical properties of the non-grain-oriented electrical steel sheet to be punched, the method for punching a stator core and the dimensions of a punching die are determined.

Examples are shown below.

By taking the Young's modulus as an example, if the Young's modulus is larger, since the residual stress decreases after the inner diameter of the stator core is punched out, deformation when the residual stress is released by core annealing becomes smaller. Therefore, depending on the anisotropy of the Young's modulus, it is preferable to reduce the dimensions of the corresponding die in the in-sheet direction in which the Young's modulus is larger and to increase the dimensions of the corresponding die in the in-sheet direction in which the Young's modulus is smaller. Thereby, the inner diameter of the stator core can be made into a perfect circle after not only punching but also core annealing. In addition, if the r value is larger, the change in the sheet width/change in the sheet thickness becomes larger due to tensile stress during punching, and the residual stress becomes larger under the condition in which the sheet width is constrained. Therefore, depending on the anisotropy of the r value, it is preferable to reduce the dimensions of the corresponding die in the in-sheet direction in which the r value is larger and to increase the dimensions of the corresponding die in the in-sheet direction in which the r value is smaller. In addition, if the n value and the yield ratio are larger, the amount of deformation from when plastic deformation starts until breakage occurs becomes small and the residual stress becomes smaller. Therefore, depending on the anisotropy of the n value and the yield ratio, it is preferable to reduce the dimensions of the corresponding die in the in-sheet direction in which the n value and/or the yield ratio is larger and to increase the die in which the n value and/or the yield ratio is smaller.

More specifically, if the anisotropy of mechanical properties of the non-grain-oriented electrical steel sheet to be punched is the Young's modulus, when the Young's modulus in the rolling direction is defined as $E0$, the Young's modulus in the direction perpendicular to the rolling direction is defined as $E90$, the Young's modulus in the direction 45 degrees from the rolling direction is defined as $E45$, and $Eave=(E0+2\times E45+E90)/4$ is defined, with respect to the target value D of the inner diameter of the core after punching, each dimension ($Di$; provided that, i=0, 45, 90) of the die in the rolling direction, the direction perpendicular to the rolling direction, and the direction 45 degrees from the rolling direction is determined so that it satisfies the following Formula (5). Thereby, it is possible to provide a motor core with a desired roundness. Here, in this specification the "target value D of the inner diameter of the core after punching" is a target value of the outer circumference circle of the punched product after punching with a die.

$$0.96 \leq (Ei/Eave) \times (Di/D) \leq 1.04 \ldots(5)$$

Here, i=0, 45, 90.

If the value of $(Ei/Eave)\times(Di/D)$ is outside the range of Formula (5), since the roundness after core annealing tends to decrease, value of $(Ei/Eave)\times(Di/D)$ is set to 0.96 or more and 1.04 or less. The value of $(Ei/Eave)\times(Di/D)$ is preferably 0.97 or more and more preferably 0.98 or more. The value of $(Ei/Eave)\times(Di/D)$ is preferably 1.03 or less and more preferably 1.02 or less.

In addition, if the anisotropy of mechanical properties of the non-grain-oriented electrical steel sheet to be punched is the r value, when the r value in the rolling direction is defined as $r0$, the r value in the direction perpendicular to the rolling direction is defined as $r90$, the r value in the direction 45 degrees from the rolling direction is defined as $r45$, and $rave=(r0+2\times r45+r90)/4$ is defined, with respect to the target value D of the inner diameter of the core after punching, each dimension ($Di$; provided that, i=0, 45, 90) of the die in the rolling direction, the direction perpendicular to the rolling direction, and the direction 45 degrees from the rolling direction is determined so that it satisfies the following Formula (6). Thereby, it is possible to provide a motor core with a desired roundness.

$$0.96 \leq (ri/rave) \times (Di/D) \leq 1.04 \ldots(6)$$

Here, i=0, 45, 90.

If the value of $(ri/rave)\times(Di/D)$ is outside the range of Formula (6), since the roundness after core annealing tends to decrease, the value of $(ri/rave)\times(Di/D)$ is set to 0.96 or more and 1.04 or less. The value of $(ri/rave)\times(Di/D)$ is preferably 0.97 or more and more preferably 0.98 or more. The value of $(ri/rave)\times(Di/D)$ is preferably 1.03 or less and more preferably 1.02 or less.

In addition, if the anisotropy of mechanical properties of the non-grain-oriented electrical steel sheet to be punched is the n value, when the n value in the rolling direction is defined as $n0$, the n value in the direction perpendicular to the rolling direction is defined as $n90$, the n value in the direction 45 degrees from the rolling direction is defined as $n45$, and $nave=(n0+2\times n45+n90)/4$ is defined, with respect to the target value D of the inner diameter of the core after punching, each dimension ($Di$; provided that, i=0, 45, 90) of the die in the rolling direction, the direction perpendicular to the rolling direction, and the direction 45 degrees from the rolling direction is determined so that it satisfies the following Formula (7). Thereby, it is possible to provide a motor core with a desired roundness.

$$0.96 \leq (n_i/n_{ave}) \times (D_i/D) \leq 1.04 \ \dots (7)$$

Here, i=0, 45, 90.

If the value of $(n_i/n_{ave}) \times (D_i/D)$ is outside the range of Formula (7), since the roundness after core annealing tends to decrease, the value of $(n_i/n_{ave}) \times (D_i/D)$ is set to 0.96 or more and 1.04 or less. The value of $(n_i/n_{ave}) \times (D_i/D)$ is preferably 0.97 or more and more preferably 0.98 or more. The value of $(n_i/n_{ave}) \times (D_i/D)$ is preferably 1.03 or less and more preferably 1.02 or less.

In addition, if the anisotropy of mechanical properties of the non-grain-oriented electrical steel sheet to be punched is the yield ratio, when the yield ratio in the rolling direction is defined as YR0, the yield ratio in the direction perpendicular to the rolling direction is defined as YR90, the yield ratio in the direction 45 degrees from the rolling direction is defined as YR45, and YRave=(YR0+2×YR45+YR90)/4 is defined, with respect to the target value D of the inner diameter of the core after punching, each dimension of the die in the rolling direction, the direction perpendicular to the rolling direction, and the direction 45 degrees from the rolling direction is determined so that it satisfies the following Formula (8). Thereby, it is possible to provide a motor core with a desired roundness.

$$0.96 \leq (YR_i/YR_{ave}) \times (D_i/D) \leq 1.04 \ \dots (8)$$

Here, i=0, 45, 90.

If the value of $(YR_i/YR_{ave}) \times (D_i/D)$ is outside the range of Formula (8), since the roundness after core annealing tends to decrease, the value of $(YR_i/YR_{ave}) \times (D_i/D)$ is set to 0.96 or more and 1.04 or less. The value of $(YR_i/YR_{ave}) \times (D_i/D)$ is preferably 0.97 or more and more preferably 0.98 or more. The value of $(YR_i/YR_{ave}) \times (D_i/D)$ is preferably 1.03 or less and more preferably 1.02 or less.

In addition, for the non-grain-oriented electrical steel sheet before being punched using the above die and the non-grain-oriented electrical steel sheet after being punched, the following conditions are satisfied according to the anisotropy of mechanical properties of the silicon steel sheet as a base material. Here, even after punching and after core annealing, the texture does not change significantly. That is, conditions to be described below are applicable both before and after punching and both before and after core annealing.

If the anisotropy of mechanical properties of the non-grain-oriented electrical steel sheet is the Young's modulus, when the Young's modulus of the non-grain-oriented electrical steel sheet in the rolling direction is defined as E0, the Young's modulus in the direction perpendicular to the rolling direction is defined as E90, and the Young's modulus in the direction 45 degrees from the rolling direction is defined as E45, the non-grain-oriented electrical steel sheet of the present embodiment satisfies the following Formula (1), and the difference between a maximum value and a minimum value of diameters of circular holes obtained by punching the steel sheet is 0.20% or less of the average diameter.

$$0.8100 \leq (E0+E90)/(2 \times E45) \leq 1.0000 \ \dots (1)$$

If the value of $(E0+E90)/(2 \times E45)$ is outside the range of Formula (1), even if a disk is punched out with a die that satisfies Formula (5), since the roundness after core annealing decreases, the value of $(E0+E90)/(2 \times E45)$ is set to 0.8100 or more and 1.0000 or less. The value of $(E0+E90)/(2 \times E45)$ is preferably 0.8300 or more and more preferably 0.8500 or more. The value of $(E0+E90)/(2 \times E45)$ is preferably 0.9800 or less and more preferably 0.9600 or less.

Here, a steel sheet whose Young's modulus satisfies Formula (1) can be produced by appropriately controlling the steel component, rolling, and annealing conditions.

In addition, if the anisotropy of mechanical properties of the non-grain-oriented electrical steel sheet is the r value, when the r value of the non-grain-oriented electrical steel sheet in the rolling direction is defined as r0, the r value in the direction perpendicular to the rolling direction is defined as r90, and the r value in the direction 45 degrees from the rolling direction is defined as r45, the non-grain-oriented electrical steel sheet of the present embodiment satisfies the following Formula (2), and the difference between a maximum value and a minimum value of diameters of circular holes obtained by punching the steel sheet is 0.2% or less of the average diameter.

$$1.0000 \leq (r0+r90)/(2 \times r45) \leq 1.3100 \ \dots (2)$$

If the value of (r0+r90)/(2×r45) is outside the range of Formula (2), even if a disk is punched out with a die that satisfies Formula (6), since the roundness after core annealing decreases, the value of (r0+r90)/(2×r45) is set to 1.0000 or more and 1.3100 or less. The value of (r0+r90)/(2×r45) is preferably 1.0500 or more and more preferably 1.1000 or more. The value of (r0+r90)/(2×r45) is preferably 1.2600 or less and more preferably 1.2100 or less.

Here, a steel sheet whose r value satisfies Formula (2) can be produced by appropriately controlling the steel component, rolling, and annealing conditions.

In addition, if the anisotropy of mechanical properties of the non-grain-oriented electrical steel sheet is defined as the n value, the n value of the non-grain-oriented electrical steel sheet in the rolling direction is defined as n0, the n value in the direction perpendicular to the rolling direction is defined as n90, and the n value in the direction 45 degrees from the rolling direction is defined as n45, the non-grain-oriented electrical steel sheet of the present embodiment satisfies the following Formula (3) and the difference between a maximum value and a minimum value of diameters of circular holes obtained by punching the steel sheet is 0.2% or less of the average diameter.

$$0.8100 \leq (n0+n90)/(2 \times n45) \leq 1.0000 \ ...(3)$$

If the value of (n0+n90)/(2×n45) is outside the range of Formula (3), even if a disk is punched out with a die that satisfies Formula (7), since the roundness after core annealing decreases, the value of (n0+n90)/(2×n45) is set to 0.8100 or more and 1.0000 or less. The value of (n0+n90)/(2×n45) is preferably 0.8300 or more and more preferably 0.8500 or more. The value of (n0+n90)/(2×n45) is preferably 0.9800 or less and more preferably 0.9600 or less.

Here, a steel sheet whose n value satisfies Formula (3) can be produced by appropriately controlling the steel component, rolling, and annealing conditions.

In addition, if the anisotropy of mechanical properties of the non-grain-oriented electrical steel sheet is the yield ratio, when the yield ratio of the non-grain-oriented electrical steel sheet in the rolling direction is defined as YR0, the yield ratio in the direction perpendicular to the rolling direction is defined as YR90, and the yield ratio in the direction 45 degrees from the rolling direction is defined as YR45, the non-grain-oriented electrical steel sheet of the present embodiment satisfies the following Formula (4) and the difference between a maximum value and a minimum value of diameters of circular holes obtained by punching the steel sheet is 0.2% or less of the average diameter.

$$0.8300 \leq (YR0+YR90)/(2 \times YR45) \leq 1.0300 \ ...(4)$$

If the value of (YR0+YR90)/(2×YR45) is outside the range of Formula (4), even if a disk is punched out with a die that satisfies Formula (8), the roundness after core annealing decreases, and thus the value of (YR0+YR90)/(2×YR45) is set to 0.8300 or more and 1.0300 or less. The value of (YR0+YR90)/(2×YR45) is preferably 0.8500 or more and more preferably 0.8700 or more. The value of (YR0+YR90)/(2×YR45) is preferably 1.0100 or less and more preferably 0.9900 or less.

Here, a steel sheet whose yield ratio satisfies Formula (4) can be produced by appropriately controlling the steel component, rolling, and annealing conditions.

The Young's modulus, the r value, the n value, and the yield ratio all are obtained by the tensile test, but the methods therefor comply with standards (JIS Z 2241 (2011)). Also in the present embodiment, for the Young's modulus, the r value, the n value, and the yield ratio of the non-grain-oriented electrical steel sheet, those obtained by measuring the non-grain-oriented electrical steel sheet before core annealing based on the standards are applicable. However, as described above, even after punching and after core annealing, the texture does not change significantly. That is, even after punching and after core annealing, since these property values (the Young's modulus, the r value, the n value, and the yield ratio) do not change, the property value measured before core annealing may be assumed to be maintained after core annealing.

Outlines of respective property values will be described below.

In the tensile test, a force is applied to both ends of a strip-shaped tensile test piece according to JIS Z 2241 (2011) for pulling and the magnitude of the load and the change in the shape of the test piece when the load is increased are measured.

As the load is increased, the strain increases in proportion to the magnitude of the load, but this proportional relationship no longer holds when the yield point is reached. The region up to this point is an elastic region, and the ratio of the stress to the strain in the elastic region is the Young's modulus. In the elastic region, when the load is removed, the strain becomes 0, and the original state is restored. A material with a high Young's modulus has a high stress for applying a certain strain. For example, the Young's modulus of single crystal iron is the smallest in the <100> direction and the largest in the <111> direction.

After the yield point is reached, even if the load is removed, the state is not restored to the original state. This region is the plastic region, and when the yield point is passed, strain occurs even with a slight load, and elongation occurs. This portion is called yield elongation. If the load is additionally added here, this portion enters a region in which the strain increases as the force increases. This portion is the uniform elongation region, and the r value (Lankford value) is the ratio between the logarithmic strain $\varepsilon w$ in the width direction and the logarithmic strain $\varepsilon t$ in the sheet thickness when uniform elongation is applied to a parallel portion of the test piece.

$$r \equiv \varepsilon w / \varepsilon t \ \ldots (11)$$

Here, $\varepsilon w = \ln(w/W)$, $\varepsilon t = \ln(t/T)$.
w/W is the strain in the sheet width direction, and t/T is the strain in the sheet thickness direction.

For example, in { 111 }<112> which is abundantly present in the steel sheet for automobile bodies, the change in the r value between 0 and 90° is small and about 2, but in {100 }<001 >, the r value is the largest in the 0° direction and the 90° direction, and becomes 0 in the 45° direction. In { 110}<001> of the grain-oriented electrical steel sheet, the r value is 1 in the 0° direction, and when the minimum value is taken in the vicinity of the 45° direction and tilting is then performed in the 90° direction, the r value increases rapidly, and the r value becomes infinite in the 90° direction.

Then, the tensile test piece elongates even under a load smaller than a certain load as a boundary, and finally breaks. Here, when the tensile strength, which is the maximum value of the load, is expressed as P and the load at the yield point is expressed as Py, the yield ratio is represented by the following Formula (12).

$$\text{yield ratio} = Py/P \ \ldots (12)$$

In addition, when it is assumed that the following n-th power hardening formula (Formula (13)) is established between the true strain $\varepsilon$ and the true stress $\sigma$, the power n in the formula is the n value.

$$\sigma = C \varepsilon n \ \ldots (13)$$

When the n value is measured, by the method according to standards (JIS Z 2241), using the tensile test piece according to JIS Z 2241, the relationship between the stress $\sigma N$ and the strain $\varepsilon N$ from the end point of yield elongation to the maximum load point is measured at 5 points or more. Based on these measured values, the true stress $\sigma$ and the true strain $\varepsilon$ are calculated by Formula (14) and Formula (15) and plotted on a logarithmic scale with the strain ($\ln \varepsilon$) on the horizontal axis and the stress ($\ln \sigma$) on the vertical axis. The slope of the straight line represented by the measurement points in this case represents the n value.

$$\sigma = (1 + \varepsilon N) \sigma N \ \ldots (14)$$

$$\varepsilon = \ln(1 + \varepsilon N) \ \ldots (15)$$

The deformation of a steel sheet progresses due to work-hardening, and the n value can be considered as a property value that represents work-hardening behavior of a sheet material in the initial stage of deformation, and thus a material with a high n value has a property of easily widening the plastic deformation region. Therefore, the n value is also called a work-hardening exponent or a strain-hardening exponent.

While the non-grain-oriented electrical steel sheet according to the present embodiment has been described above, the sheet thickness of the non-grain-oriented electrical steel sheet according to the present embodiment may be 0.35 mm or less. More preferably, the sheet thickness is 0.30 mm or less. On the other hand, excessive thinning causes the productivity of steel sheets and motors to be significantly lowered, the sheet thickness is preferably 0.10 mm or more and more preferably 0.15 mm or more.

The sheet thickness may be measured with a micrometer. Here, when the non-grain-oriented electrical steel sheet as a measurement sample has an insulation coating or the like on the surface, the sheet thickness is measured after the coating or the like is removed.

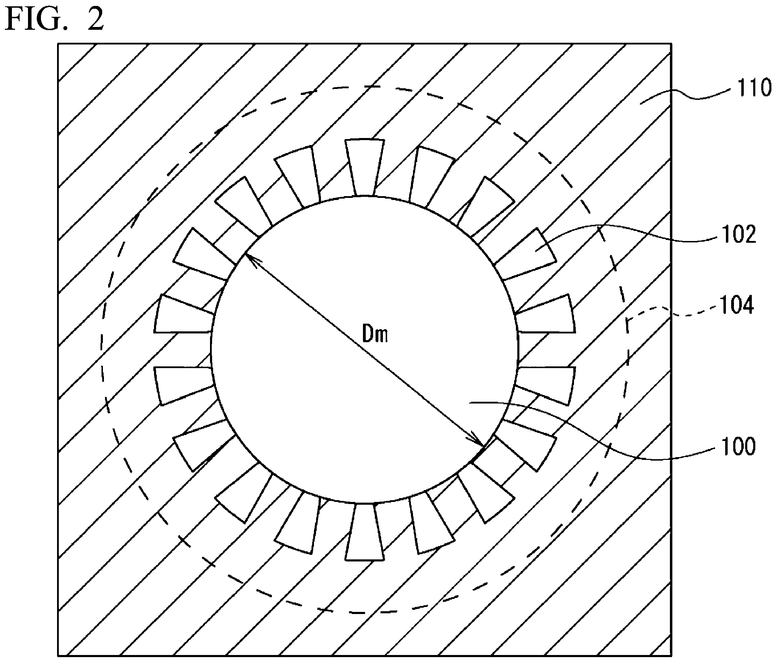

Fig. 2 is a plan view for illustrating a state in which a non-grain-oriented electrical steel sheet 110 constituting the stator core 21 shown in Fig. 1 is sequentially punched out with male dies 100, 102, and 104.

First, the non-grain-oriented electrical steel sheet 110 is punched out with the columnar male die 100. The circular portion punched out in this case becomes the rotor core. Next, the gap between portions that become the teeth 23 is punched out and the gap between portions that become the teeth 23 is punched out with the male die 102. Next, the portion corresponding to the outer diameter of the stator core 21 is punched out, and the outer diameter is punched out with the columnar die 104. The outer diameter Dm of the male die 100 corresponds to the inner diameter D of the stator core 21. The male die 100 and the female die 110 are constructed such that the outer diameter Dm of the male die 100 satisfies Di of the above Formulae (5) to (8). In addition, the male die 100 and the female die 110 are constructed such that the outer diameter of the male die 104 satisfies Di of the above Formulae (5) to (8). Here, the dies for punching the non-grain-oriented electrical steel sheet according to the present embodiment include the male dies 100 and 104 and female dies corresponding to the male dies 100 and 104. The outer diameter of the male dies 100 and 104 may be smaller than the inner diameter of the female die corresponding to the male dies 100 and 104 by a predetermined clearance required for punching.

The non-grain-oriented electrical steel sheet according to the present embodiment includes a silicon steel sheet as a base material, and a known non-grain-oriented electrical steel sheet can be used as the silicon steel sheet. Hereinafter, an example of a preferable chemical composition of the base material will be described. Here, "%" of the following chemical component means "mass%." In addition, a limited numerical value range indicated by "to" includes the lower limit value and the upper limit value.

The chemical composition of the base material contains, in mass%, Si: 3.0% to 6.0%, with the remainder being made up of Fe and impurities. The other elements are not particularly limited. However, in the present embodiment, in addition to Si, Fe and impurities, the composition may contain elements within a range in which the effects of the present invention are not inhibited. For example, it is allowable to contain the following elements within the following range in place of some Fe. The content ranges of representative selective elements are as follows.

C: 0.0010 to 0.0040%,
Si: 2.5 to 4.5%,
Al: 0.2 to 2.5%,
Mn: 0.1 to 3.5%,
P: more than 0% and 0.10% or less,
S: 0 to 0.0030%,
N: 0 to 0.0030%,
Ti: 0 to 0.0030%,
Mo: 0.0010 to 0.10%,
Cr: 0 to 0.10%,
B: 0 to 0.0010%,
Ni: 0 to 0.50%,
Cu: 0 to 0.50%,
Sn: 0 to 0.20%,
Sb: 0 to 0.20%,
Ca: 0 to 0.0050%,
La: 0 to 0.0050%,
Ce: 0 to 0.0050%,
O: 0 to 0.10%,
V: 0 to 0.10%,
W: 0 to 0.10%,
Zr: 0 to 0.10%,
Nb: 0 to 0.10%,
Mg: 0 to 0.10%,
Bi: 0 to 0.10%,
Nd: 0 to 0.10%,
Y: 0 to 0.10%.

There is no need to limit the lower limit value of the above selective elements because they are contained depending on the purpose, and it is not necessary to substantially contain them. In addition, even if these selective elements are contained as impurities, the effects of the present embodiment are not impaired. In addition, since it is difficult to make the C content in practical steel sheets 0% in terms of production, the C content may be more than 0%. In addition, here, impurities are elements that are unintentionally contained, and are elements that are mixed in from raw materials such as ores and scraps or the production environment when base steel sheets are industrially produced. The upper limit of the total content of impurities may be, for example, 5%. Here, excessive contents of Sn and Sb may lead to an increase in { 110}<001>, and as a result, the anisotropy of the Young's modulus may be expanded. Therefore, the content of each of Sn and Sb is preferably 0.01% or less.

The chemical components of the base material may be measured by a general analysis method for steel. For example, the chemical components of the base steel sheet may be measured using inductively coupled plasma-atomic emission spectrometry (ICP-AES). Specifically, for example, a 35 mm square test piece is acquired from the center position at the base steel sheet after the coating is removed, and identification can be performed by performing measurement under conditions based on a pre-created calibration curve by ICPS-8100 or the like (measuring device, commercially available from Shimadzu Corporation). Here, C and S may be measured using a combustion-infrared absorption method, and N may be measured using an inert gas fusion-thermal conductivity method.

Here, the above chemical compositions are components of the silicon steel sheet as a base material. When the non-grain-oriented electrical steel sheet as a measurement sample has an insulation coating or the like on the surface, the chemical composition is measured after the coating or the like is removed by a known method.

The present disclosure is not limited to the above embodiments. The above embodiments are examples, and any embodiment that has substantially the same configuration and exhibits the same operation and effect as in the technical idea described in the claims of the present disclosure may be used and included in the technical scope of the present disclosure.

In addition, a case in which a hole having a circular shape is punched out in the non-grain-oriented electrical steel sheet has been exemplified in the present embodiment, but the present embodiment can also be applied to a case in which a hole having a shape other than a circular shape is punched out.

[Examples]

Hereinafter, the present disclosure will be described in detail with reference to examples. Here, the conditions in the examples indicate that they are examples used for confirming the feasibility and effects of the present disclosure, and the present disclosure is not limited by the conditions of these examples. Various conditions can be are used in the present disclosure as long as it achieves its purpose without departing from the spirit and scope of the present disclosure.

Here, the underlines in Table 1 to Table 6 indicate conditions outside the scope or preferable scope of the present invention, unpreferable die conditions, or unpreferable property values.

(Example 1)

A hot-rolled sheet having a sheet thickness of 3 mm containing, in mass%, Si: 3.0%, Al: 0.5%, Mn: 0.2%, and C: 0.0020% with the remainder being made up of Fe and impurities was produced, and annealed at 800°C to 1,100°C for 1 minute to 10 minutes to obtain a hot-rolled annealed sheet. The hot-rolled annealed sheet was cold-rolled so that it had a sheet thickness of 0.4 mm to 2.0 mm, annealed at 800°C to 1,100°C for 1 minute to 10 minutes (intermediate annealing), and cold-rolled again to obtain a cold-rolled sheet having a sheet thickness of 0.2 mm. The cold-rolled sheet was subjected to annealing (final annealing) at 750°C for 30 seconds to obtain non-grain-oriented electrical steel sheets (No. A1 to No. A17 (materials 1A to 1Q)) having a mechanical property (Young's modulus) shown in Table 1.

The obtained non-grain-oriented electrical steel sheets (materials 1A to 1Q) were punched out with the die shown in Table 2 and then subjected to core annealing at 750°C for 2 hours. As a result, in No. A1 to No. A8 using the materials 1A to 1H satisfying Formula (1), when punched out with any die of 1R to 1Z satisfying Formula (5), predetermined dimensions with high roundness satisfying the above evaluation criteria were obtained. On the other hand, in Nos. A9 to A15 using materials (1J to 1Q) other than 1A to 1H, since all the dies used were dies that did not satisfy Formula (5), predetermined dimensions with high roundness satisfying the above evaluation criteria could not be obtained. In addition, in No. A17 using the material 1J that did not satisfy Formula (1), even when punched out with the die satisfying Formula (5), the roundness decreased, and predetermined dimensions with high roundness satisfying the above evaluation criteria could not be obtained. In addition, in No. A16, the material 1A satisfying Formula (1) was used, but the die did not satisfy Formula (5), and thus the roundness decreased and predetermined dimensions with high roundness satisfying the above evaluation criteria could not be obtained. Here, the target diameter D of the outer circumference circle of the punched product after punching was a diameter of 120 mm. Here, predetermined dimensions with high roundness satisfying the above evaluation criteria were that the value of the maximum value-minimum value of the diameter after punching and after core annealing was 0.20% or less of the average diameter (target diameter), and when the target diameter was 120 mm, the diameter after punching and after core annealing was within a range of 120 mm±0.12 mm.

[Table 1]

| No | Material | E0 (UPa) | E45 (GPa) | E90 (GPa) | Eave (GPa) | E0/Eave | E45/Eave | E90/Eave | (E0+E90)/(2x E45) | Die used | (E0/Eave)x (D0/D) | (E45/Eave)x (D45/D) | (F.90/Rave)x (D90/D) | Roundness (%) | Note |
|---|---|---|---|---|---|---|---|---|---|---|---|---|---|---|---|
| A1 | 1A | 180 | 198 | 189 | 191 | 0.94 | 1.04 | 0.99 | 0.9318 | 1S | 1.00 | 1.00 | 1.00 | 0.10 | Invention Example |
| A2 | 1B | 175 | 201 | 187 | 191 | 0.92 | 1.05 | 0.98 | 0.9000 | 1T | 1.00 | 1.00 | 1.00 | 0.15 | Invention Example |
| A3 | 1C | 185 | 198 | 191 | 193 | 0.96 | 1.03 | 0.99 | 0.9486 | 1U | 1.00 | 0.99 | 1.00 | 0.12 | Invention Example |
| A4 | 1D | 187 | 196 | 193 | 193 | 0.97 | 1.02 | 1.00 | 0.9667 | 1V | 1.00 | 1.00 | 1.00 | 0.11 | Invention Example |
| A5 | 1E | 165 | 198 | 182 | 186 | 0.89 | 1.07 | 0.98 | 0.8750 | 1W | 1.00 | 1.01 | 1.00 | 0.16 | Invention Example |
| A6 | 1F | 160 | 200 | 184 | 186 | 0.86 | 1.08 | 0.99 | 0.8600 | 1X | 1.00 | 1.00 | 1.00 | 0.16 | Invention Example |
| A7 | 1G | 155 | 202 | 181 | 185 | 0.84 | 1.09 | 0.98 | 0.8346 | 1Y | 1.00 | 1.00 | 1.00 | 0.17 | Invention Example |
| A8 | 1H | 153 | 207 | 184 | 187 | 0.82 | 1.10 | 0.98 | 0.8148 | 1Z | 0.97 | 1.00 | 1.00 | 0.18 | Invention Example |
| A9 | 1J | 180 | 244 | 216 | 221 | 0.81 | 1.11 | 0.98 | 0.8098 | 1S | 0.87 | 1.07 | 0.99 | 0.28 | Comparative Example |
| A10 | 1K | 175 | 245 | 210 | 219 | 0.80 | 1.12 | 0.96 | 0.7857 | 1T | 0.87 | 1.06 | 0.98 | 0.29 | Comparative Example |
| A11 | 1L | 165 | 234 | 198 | 208 | 0.79 | 1.13 | 0.95 | 0.7746 | 1U | 0.82 | 1.08 | 0.96 | 0.30 | Comparative Example |
| A12 | 1M | 185 | 266 | 222 | 235 | 0.79 | 1.13 | 0.94 | 0.7639 | 1V | 0.81 | 1.11 | 0.94 | 0.31 | Comparative Example |
| A13 | 1N | 170 | 185 | 204 | 186 | 0.91 | 1.00 | 1.10 | 1.0092 | 1W | 1.02 | 0.94 | 1.12 | 0.25 | Comparative Example |
| A14 | 1P | 175 | 187 | 210 | 190 | 0.92 | 0.99 | 1.11 | 1.0280 | 1X | 1.07 | 0.92 | 1.12 | 0.24 | Comparative Example |

(continued)

| No | Material | E0 (UPa) | E45 (GPa) | E90 (GPa) | Eave (GPa) | E0/Eave | E45/Eave | E90/Eave | (E0+E90)/(2x E45) | Die used | (E0/Eave)x(D0/D) | (E45/Eave)x(D45/D) | (F. 90/Rave)x(D90/D) | Roundness (%) | Note |
|---|---|---|---|---|---|---|---|---|---|---|---|---|---|---|---|
| A15 | 1Q | 185 | 194 | 222 | 199 | 0.93 | 0.98 | 1.12 | <u>1.0476</u> | 1Y | <u>1.11</u> | <u>0.90</u> | 1.14 | <u>0.23</u> | Comparative Example |
| A16 | 1A | 180 | 198 | 189 | 191 | 0.94 | 1.04 | 0.99 | 0.9318 | 1R | <u>1.12</u> | 1.04 | 0.99 | <u>0.21</u> | Comparative Example |
| A17 | 1J | 180 | 244 | 216 | 221 | 0.81 | 1.11 | 0.98 | <u>0.8098</u> | 1Z | 0.96 | 1.01 | 1.00 | <u>0.22</u> | Comparative Example |

[Table 2]

| Die | Die diameter | | | Target diameter | D0/D | D45/D | D90/D |
|---|---|---|---|---|---|---|---|
| | D0 | D45 | D90 | D | | | |
| | (mm) | (mm) | (mm) | (mm) | | | |
| 1R | 120 | 120 | 120 | 120 | 1 | 1 | 1 |
| 1S | 127.8 | 115.8 | 121.2 | 120 | 1.065 | 0.965 | 1.01 |
| 1T | 130.8 | 114 | 122.4 | 120 | 1.09 | 0.95 | 1.02 |
| 1U | 124.8 | 115.2 | 121.2 | 120 | 1.04 | 0.96 | 1.01 |
| 1V | 123.6 | 117.6 | 120 | 120 | 1.03 | 0.98 | 1 |
| 1W | 135 | 112.8 | 122.4 | 120 | 1.125 | 0.94 | 1.02 |
| 1X | 139.2 | 111.6 | 121.2 | 120 | 1.16 | 0.93 | 1.01 |
| 1Y | 142.8 | 110.4 | 122.4 | 120 | 1.19 | 0.92 | 1.02 |
| 1Z | 141.6 | 109.2 | 122.4 | 120 | 1.18 | 0.91 | 1.02 |

(Example 2)

A hot-rolled sheet having a sheet thickness of 3 mm containing, in mass%, Si: 3.0%, Al: 0.5%, Mn: 0.2%, and C: 0.0020% with the remainder being made up of Fe and impurities was produced, and annealed at 800°C to 1,100°C for 1 minute to 10 minutes to obtain a hot-rolled annealed sheet. The hot-rolled annealed sheet was cold-rolled so that it had a sheet thickness of 0.4 mm to 2.0 mm, annealed at 800°C to 1,100°C for 1 minute to 10 minutes (intermediate annealing), and cold-rolled again to obtain a cold-rolled sheet having a sheet thickness of 0.2 mm. The cold-rolled sheet was subjected to annealing (final annealing) at 750°C for 30 seconds to obtain non-grain-oriented electrical steel sheets (No. B1 to No. B17 (materials 2A to 2Q)) having a mechanical property (r value) shown in Table 3.

The obtained non-grain-oriented electrical steel sheets (materials 2A to 2Q) were punched out with the die shown in Table 4 and then subjected to core annealing at 750°C for 2 hours. As a result, in No. B1 to No. B8 using the materials 2A to 2H satisfying Formula (2), when punched out with any die of 2R to 2Z satisfying Formula (6), predetermined dimensions with high roundness satisfying the above evaluation criteria were obtained. On the other hand, in Nos. B9 to B15 using materials (2J to 2Q) other than 2A to 2H, since all the dies used were dies that did not satisfy Formula (6), predetermined dimensions with high roundness satisfying the above evaluation criteria could not be obtained. In addition, in No. A17 using the material 2N that did not satisfy Formula (2), even when punched out with the die satisfying Formula (6), the roundness decreased, and predetermined dimensions with high roundness satisfying the above evaluation criteria could not be obtained. In addition, in No. B16, the material 2A satisfying Formula (1) was used, but the die did not satisfy Formula (6), and thus the roundness decreased and predetermined dimensions with high roundness satisfying the above evaluation criteria could not be obtained. Here, the target diameter D of the outer circumference circle of the punched product after punching was a diameter of 120 mm. Here, predetermined dimensions with high roundness satisfying the above evaluation criteria were that the value of the maximum value-minimum value of the diameter after punching and after core annealing was 0.20% or less of the average diameter (target diameter), and when the target diameter was 120 mm, the diameter after punching and after core annealing was within a range of 120 mm±0.12 mm.

[Table 3]

| No. | Material | r0 | r45 | r90 | rave | r0/rave | r45/rave | r90/rave | (r0/r90)/(2×r45) | Die used | (r0/rave)×(DO/D) | (r45/rave)×(D45/D) | (r90/rave)×(D90/D) | Roundness (%) | Note |
|---|---|---|---|---|---|---|---|---|---|---|---|---|---|---|---|
| B1 | 2A | 1.58 | 1.50 | 1.62 | 1.55 | 1.02 | 0.97 | 1.05 | 1.0667 | 2S | 1.00 | 1.00 | 1.02 | 0.12 | Invention Example |
| B2 | 2B | 1.34 | 1.24 | 1.38 | 1.30 | 1.03 | 0.95 | 1.06 | 1.0968 | 2T | 1.00 | 1.00 | 1.00 | 0.11 | Invention Example |
| B3 | 2C | 1.82 | 1.78 | 1.82 | 1.80 | 1.01 | 0.99 | 1.01 | 1.0225 | 2U | 1.00 | 1.00 | 0.99 | 0.11 | Invention Example |
| B4 | 2D | 2.00 | 2.00 | 2.00 | 2.00 | 1.00 | 1.00 | 1.00 | 1.0000 | 2U | 0.99 | 1.01 | 0.99 | 0.12 | Invention Example |
| B5 | 2E | 1.23 | 1.15 | 1.32 | 1.21 | 1.01 | 0.95 | 1.09 | 1.1087 | 2W | 1.00 | 1.00 | 1.00 | 0.10 | Invention Example |
| B6 | 2F | 1.12 | 1.02 | 1.24 | 1.10 | 1.02 | 0.93 | 1.13 | 1.1569 | 2X | 1.00 | 1.00 | 1.01 | 0.11 | Invention Example |
| B7 | 2G | 1.02 | 0.90 | 1.18 | 1.00 | 1.02 | 0.90 | 1.18 | 1.2222 | 2Y | 1.00 | 1.00 | 1.00 | 0.12 | Invention Example |
| B8 | 2H | 0.92 | 0.78 | 1.12 | 0.90 | 1.02 | 0.87 | 1.24 | 1.3077 | 27. | 1.03 | 1.00 | 0.99 | 0.14 | Invention Example |
| B9 | 2J | 1.58 | 2.18 | 1.90 | 1.96 | 0.81 | 1.11 | 0.97 | 0.7971 | 2S | 0.79 | 1.14 | 0.94 | 0.30 | Comparative Example |
| B10 | 2K | 1.54 | 2.15 | 1.84 | 1.92 | 0.80 | 1.12 | 0.96 | 0.7857 | 2T | 0.78 | 1.18 | 0.91 | 0.29 | Comparative Example |
| B11 | 2L | 1.45 | 2.06 | 1.74 | 1.82 | 0.79 | 1.13 | 0.95 | 0.7746 | 2U | 0.78 | 1.14 | 0.94 | 0.27 | Comparative Example |
| B12 | 2M | 1.62 | 2.34 | 1.95 | 2.06 | 0.79 | 1.13 | 0.94 | 0.7639 | 2W | 0.78 | 1.19 | 0.86 | 0.28 | Comparative Example |
| B13 | 2N | 1.49 | 1.24 | 1.84 | 1.45 | 1.03 | 1.03 | 1.26 | 1.3434 | 2X | 1.01 | 1.11 | 1.13 | 0.22 | Comparative Example |
| B14 | 2P | 1.54 | 1.26 | 1.84 | 1.47 | 1.04 | 0.85 | 1.25 | 1.3415 | 2Y | 1.02 | 0.94 | 1.06 | 0.21 | Comparative Example |

EP 4 316 685 A1

(continued)

| No. | Material | r0 | r45 | r90 | rave | r0/rave | r45/rave | r90/rave | (r0/r90)/(2×r45) | Die used | (r0/rave)×(DO/D) | (r45/rave)×(D45/D) | (r90/rave)×(D90/D) | Roundness (%) | Note |
|---|---|---|---|---|---|---|---|---|---|---|---|---|---|---|---|
| B15 | 2Q | 1.62 | 1.32 | 1.95 | 1.55 | 1.05 | 0.85 | 1.26 | 1.3580 | 2Z | 1.06 | 0.98 | 1.01 | 0.25 | Comparative Example |
| B16 | 2A | 1.58 | 1.50 | 1.62 | 1.55 | 1.02 | 0.97 | 1.05 | 1.0667 | 2R | 1.02 | 0.97 | 1.05 | 0.21 | Comparative Example |
| B17 | 2N | 1.49 | 1.24 | 1.84 | 1.45 | 1.03 | 0.85 | 1.26 | 1.3434 | 2Z | 1.04 | 0.98 | 1.01 | 0.25 | Comparative Example |

[Table 4]

| Die | Die diameter | | | Target diameter | D0/D | D45/D | D90/D |
|---|---|---|---|---|---|---|---|
| | D0 | D45 | D90 | D | | | |
| | (mm) | (mm) | (mm) | (mm) | | | |
| 2R | 120 | 120 | 120 | 120 | 1 | 1 | 1 |
| 2S | 117.6 | 123.6 | 116.4 | 120 | 0.98 | 1.03 | 0.97 |
| 2T | 116.4 | 126 | 113.4 | 120 | 0.97 | 1.05 | 0.945 |
| 2U | 118.8 | 121.2 | 118.2 | 120 | 0.99 | 1.01 | 0.985 |
| 2W | 118.8 | 126 | 109.8 | 120 | 0.99 | 1.05 | 0.915 |
| 2X | 117.6 | 129.6 | 106.8 | 120 | 0.98 | 1.08 | 0.89 |
| 2Y | 117.6 | 133.2 | 102 | 120 | 0.98 | 1.11 | 0.85 |
| 2Z | 121.2 | 138 | 96 | 120 | 1.01 | 1.15 | 0.8 |

(Example 3)

A hot-rolled sheet having a sheet thickness of 3 mm containing, in mass%, Si: 3.0%, Al: 0.5%, Mn: 0.2%, and C: 0.0020% with the remainder being made up of Fe and impurities was produced, and annealed at 800°C to 1,100°C for 1 minute to 10 minutes to obtain a hot-rolled annealed sheet. The hot-rolled annealed sheet was cold-rolled so that it had a sheet thickness of 0.4 mm to 2.0 mm, annealed at 800°C to 1,100°C for 1 minute to 10 minutes (intermediate annealing), and cold-rolled again to obtain a cold-rolled sheet having a sheet thickness of 0.2 mm. The cold-rolled sheet was subjected to annealing (final annealing) at 750°C for 30 seconds to obtain non-grain-oriented electrical steel sheets (No. C1 to No. C17 (materials 3A to 3Q)) having a mechanical property (n value) shown in Table 5.

The obtained non-grain-oriented electrical steel sheets (materials 3A to 3Q) were punched out with the die shown in Table 6 and then subjected to core annealing at 750°C for 2 hours. As a result, in No. C1 to No. C8 using the materials 3A to 3H satisfying Formula (3), even when punched with any die of 3R to 3Z satisfying Formula (7), predetermined dimensions with high roundness satisfying the above evaluation criteria were obtained. On the other hand, in Nos. C9 to C15 using materials (3J to 3Q) other than 3A to 3H, since all the dies used were dies that did not satisfy Formula (7), predetermined dimensions with high roundness satisfying the above evaluation criteria could not be obtained. In addition, in No. C17 using the material 3J that did not satisfy Formula (3), even when punched out with the die satisfying Formula (7), the roundness decreased and predetermined dimensions with high roundness satisfying the above evaluation criteria could not be obtained. In addition, in No. C16, the material 3A satisfying Formula (3) was used, but the die did not satisfy Formula (7), and thus the roundness decreased and predetermined dimensions with high roundness satisfying the above evaluation criteria could not be obtained. Here, the target diameter D of the outer circumference circle of the punched product after punching was a diameter of 120 mm. Here, predetermined dimensions with high roundness satisfying the above evaluation criteria were that the value of the maximum value-minimum value of the diameter after punching and after core annealing was 0.20% or less of the average diameter (target diameter), and when the target diameter was 120 mm, the diameter after punching and after core annealing was within a range of 120 mm±0.12 mm.

[Table 5]

| No | Material | n0 | n45 | n90 | nave | n0/nave | n45/nave | n90/nave | (n0/n90)/(2×n45) | Die used | (n0/nave)×(D0/D) | (n45/nave)×(D45/D) | (n90/nave)×(D90/D) | Roundness (%) | Note |
|---|---|---|---|---|---|---|---|---|---|---|---|---|---|---|---|
| C1 | 3A | 0.078 | 0.085 | 0.082 | 0.083 | 0.94 | 1.04 | 0.99 | 0.9318 | 3S | 1.00 | 1.00 | 1.00 | 0.11 | Invention Example |
| C2 | 3B | 0.076 | 0.087 | 0.081 | 0.082 | 0.92 | 1.05 | 0.98 | 0.9000 | 3T | 1.00 | 1.00 | 1.00 | 0.12 | Invention Example |
| C3 | 3C | 0.080 | 0.085 | 0.082 | 0.083 | 0.96 | 1.03 | 0.99 | 0.9486 | 3U | 1.00 | 0.99 | 1.00 | 0.14 | Invention Example |
| C4 | 3D | 0.081 | 0.085 | 0.083 | 0.083 | 0.97 | 1.02 | 1.00 | 0.9667 | 3V | 1.00 | 1.00 | 1.00 | 0.11 | Invention Example |
| C5 | 3E | 0.071 | 0.085 | 0.078 | 0.080 | 0.89 | 1.07 | 0.98 | 0.8750 | 3W | 1.00 | 1.01 | 1.00 | 0.14 | Invention Example |
| C6 | 3F | 0.069 | 0.086 | 0.079 | 0.080 | 0.86 | 1.08 | 0.99 | 0.8600 | 3X | 1.00 | 1.00 | 1.00 | 0.10 | Invention Example |
| C7 | 3G | 0.067 | 0.087 | 0.078 | 0.080 | 0.84 | 1.09 | 0.98 | 0.8346 | 3Y | 1.00 | 1.00 | 1.00 | 0.12 | Invention Example |
| C8 | 3H | 0.066 | 0.089 | 0.079 | 0.081 | 0.82 | 1.10 | 0.98 | 0.8148 | 3Z | 0.98 | 1.00 | 1.00 | 0.15 | Invention Example |
| C9 | 3J | 0.078 | 0.106 | 0.093 | 0.096 | 0.81 | 1.11 | 0.97 | 0.8029 | 3S | 0.86 | 1.07 | 0.98 | 0.26 | Comparative Example |
| C10 | 3K | 0.076 | 0.106 | 0.091 | 0.094 | 0.80 | 1.12 | 0.96 | 0.7857 | 3T | 0.87 | 1.06 | 0.98 | 0.25 | Comparative Example |
| C11 | 3L | 0.071 | 0.101 | 0.085 | 0.090 | 0.79 | 1.13 | 0.95 | 0.7746 | 3U | 0.82 | 1.08 | 0.96 | 0.28 | Comparative Example |
| C12 | 3M | 0.080 | 0.115 | 0.096 | 0.101 | 0.79 | 1.13 | 0.94 | 0.7639 | 3V | 0.81 | 1.11 | 0.94 | 0.29 | Comparative Example |
| C13 | 3N | 0.073 | 0.080 | 0.088 | 0.080 | 0.91 | 1.00 | 1.10 | 1.0092 | 3W | 1.02 | 0.94 | 1.12 | 0.23 | Comparative Example |
| C14 | 3P | 0.076 | 0.081 | 0.091 | 0.082 | 0.92 | 0.99 | 1.11 | 1.0280 | 3X | 1.07 | 0.92 | 1.12 | 0.25 | Comparative Example |

| No | Material | n0 | n45 | n90 | nave | n0/nave | n45/nave | n90/nave | (n0/n90)/(2×n 45) | Die used | (n0/nave) ×( DO/D) | (n45/nave) ×(D45/D) | (n90/nave) × (D90/D) | Roundness (%) | Note |
|---|---|---|---|---|---|---|---|---|---|---|---|---|---|---|---|
| C15 | 3Q | 0.080 | 0.084 | 0.096 | 0.086 | 0.93 | 0.98 | 1.12 | 1.0476 | 3Y | 1.11 | 0.90 | 1.14 | 0.27 | Comparative Example |
| C16 | 3A | 0.078 | 0.085 | 0.082 | 0.083 | 0.94 | 1.04 | 0.99 | 0.9318 | 3R | 0.94 | 1.04 | 0.99 | 0.21 | Comparative Example |
| C17 | 3J | 0.078 | 0.106 | 0.093 | 0.096 | 0.81 | 1.11 | 0.97 | 0.8029 | 3Z | 0.96 | 1.01 | 0.99 | 0.26 | Comparative Example |

[Table 6]

| Die | Die diameter | | | Target diameter | D0/D | D45/D | D90/D |
|---|---|---|---|---|---|---|---|
| | D0 | D45 | D90 | D | | | |
| | (mm) | (mm) | (mm) | (mm) | | | |
| 3R | 120 | 120 | 120 | 120 | 1 | 1 | 1 |
| 3S | 127.8 | 115.8 | 121.2 | 120 | 1.065 | 0.965 | 1.01 |
| 3T | 130.8 | 114. | 122.4 | 120 | 1.09 | 0.95 | 1.02 |
| 3U | 124.8 | 115.2 | 121.2 | 120 | 1.04 | 0.96 | 1.01 |
| 3V | 123.6 | 117.6 | 120 | 120 | 1.03 | 0.98 | 1 |
| 3W | 135 | 112.8 | 122.4 | 120 | 1.125 | 0.94 | 1.02 |
| 3X | 139.2 | 111.6 | 121.2 | 120 | 1.16 | 0.93 | 1.01 |
| 3Y | 142.8 | 110.4 | 122.4 | 120 | 1.19 | 0.92 | 1.02 |
| 3Z | 142.8 | 109.2 | 122.4 | 120 | 1.19 | 0.91 | 1.02 |

(Example 4)

A hot-rolled sheet having a sheet thickness of 3 mm containing, in mass%, Si: 3.0%, Al: 0.5%, Mn: 0.2%, and C: 0.0020% with the remainder being made up of Fe and impurities was produced, and annealed at 800°C to 1,100°C for 1 minute to 10 minutes to obtain a hot-rolled annealed sheet. The hot-rolled annealed sheet was cold-rolled so that it had a sheet thickness of 0.4 mm to 2.0 mm, annealed at 800°C to 1,100°C for 1 minute to 10 minutes (intermediate annealing), and cold-rolled again to obtain a cold-rolled sheet having a sheet thickness of 0.2 mm. The cold-rolled sheet was subjected to annealing (final annealing) at 750°C for 30 seconds to obtain non-grain-oriented electrical steel sheets (No. D1 to No. D17 (materials 4A to 4Q)) having a mechanical property (yield ratio) shown in Table 7.

The obtained non-grain-oriented electrical steel sheets (materials 4A to 4Q) were punched out with the die shown in Table 8 and then subjected to core annealing at 750°C for 2 hours. As a result, in No. D1 to No. D8 using the materials 4A to 4H satisfying Formula (4), when punched out with any die of 4R to 4Z satisfying Formula (8), predetermined dimensions with high roundness satisfying the above evaluation criteria were obtained. On the other hand, in Nos. D9 to D15 using materials (4J to 4Q) other than 4A to 4H, since all the dies used were dies that did not satisfy Formula (8), predetermined dimensions with high roundness satisfying the above evaluation criteria could not be obtained. In addition, in No. D17 using the material 4J that did not satisfy Formula (4), when punched out with the die satisfying Formula (8), the roundness decreased and predetermined dimensions with high roundness satisfying the above evaluation criteria could not be obtained. In addition, in No. D16, the material 4E satisfying Formula (4) was used, but the die did not satisfy Formula (8), and thus the roundness decreased and predetermined dimensions with high roundness satisfying the above evaluation criteria could not be obtained. Here, the target diameter D of the outer circumference circle of the punched product after punching was a diameter of 120 mm. Here, predetermined dimensions with high roundness satisfying the above evaluation criteria were that the value of the maximum value-minimum value of the diameter after punching and after core annealing was 0.20% or less of the average diameter (target diameter), and when the target diameter was 120 mm, the diameter after punching and after core annealing was within a range of 120 mm±0.12 mm.

[Table 7]

| No | Material | YR0 | YR45 | YR90 | YRave | YR0/YRave | YR45/YRave | YR90/YRave | (YR0/YR90)/(2×YR45) | Die used | (YR0/YRave)×(D0/D) | (YR45/YRave)×(D45/D) | (YR90/YRave)×(D90/D) | Roundness (%) | Note |
|---|---|---|---|---|---|---|---|---|---|---|---|---|---|---|---|
| D1 | 4A | 0.733 | 0.754 | 0.744 | 0.747 | 0.98 | 1.01 | 1.00 | 0.9792 | 4R | 0.98 | 1.01 | 1.00 | 0.15 | Invention Example |
| D2 | 4B | 0.720 | 0.763 | 0.739 | 0.746 | 0.96 | 1.02 | 0.99 | 0.9563 | 4S | 1.03 | 0.99 | 1.00 | 0.12 | Invention Example |
| D3 | 4C | 0.747 | 0.754 | 0.748 | 0.751 | 1.00 | 1.00 | 1.00 | 0.9913 | 4R | 1.00 | 1.00 | 1.00 | 0.13 | Invention Example |
| D4 | 4D | 0.753 | 0.750 | 0.754 | 0.752 | 1.00 | 1.00 | 1.00 | 1.0042 | 4R | 1.00 | 1.00 | 1.00 | 0.11 | Invention Example |
| D5 | 4E | 0.692 | 0.754 | 0.724 | 0.731 | 0.95 | 1.03 | 0.99 | 0.9385 | 4T | 1.03 | 0.98 | 1.01 | 0.12 | Invention Example |
| D6 | 4F | 0.678 | 0.760 | 0.731 | 0.732 | 0.93 | 1.04 | 1.00 | 0.9274 | 4W | 1.04 | 0.98 | 1.02 | 0.14 | Invention Example |
| D7 | 4G | 0.665 | 0.763 | 0.723 | 0.729 | 0.91 | 1.05 | 0.99 | 0.9090 | 4S | 0.97 | 1.01 | 1.00 | 0.12 | Invention Example |
| D8 | 4H | 0.659 | 0.777 | 0.729 | 0.735 | 0.90 | 1.06 | 0.99 | 0.8939 | 4X | 1.04 | 0.98 | 1.00 | 0.13 | Invention Example |
| D9 | 4J | 0.733 | 0.947 | 0.833 | 0.865 | 0.85 | 1.09 | 0.96 | 0.8265 | 4R | 0.85 | 1.09 | 0.96 | 0.29 | Comparative Example |
| D10 | 4K | 0.720 | 0.927 | 0.816 | 0.847 | 0.85 | 1.09 | 0.96 | 0.8288 | 4S | 0.90 | 1.06 | 0.97 | 0.28 | Comparative Example |
| D11 | 4L | 0.692 | 0.890 | 0.783 | 0.814 | 0.85 | 1.09 | 0.96 | 0.8287 | 4R | 0.85 | 1.09 | 0.96 | 0.30 | Comparative Example |
| D12 | 4M | 0.747 | 0.971 | 0.849 | 0.885 | 0.84 | 1.10 | 0.96 | 0.8217 | 4T | 0.92 | 1.04 | 0.98 | 0.29 | Comparative Example |
| D13 | 4N | 0.706 | 0.734 | 0.807 | 0.745 | 0.95 | 0.99 | 1.08 | 1.0303 | 4W | 1.07 | 0.93 | 1.10 | 0.25 | Comparative Example |
| D14 | 4P | 0.720 | 0.744 | 0.816 | 0.756 | 0.95 | 0.98 | 1.08 | 1.0324 | 4X | 1.10 | 0.92 | 1.09 | 0.27 | Comparative Example |

EP 4 316 685 A1

24

| No | Material | YR0 | YR45 | YR90 | YRave | YR0/YRave | YR45/YRave | YR90/YRave | (YR0/YR90)/(2×YR45) | Die used | (YR0/YRave)×(D0/D) | (YR45/YRave)×(D45/D) | (YR90/YRave)×(D90/D) | Roundness (%) | Note |
|---|---|---|---|---|---|---|---|---|---|---|---|---|---|---|---|
| D15 | 4Q | 0.747 | 0.768 | 0.849 | 0.783 | 0.95 | 0.98 | 1.08 | 1.0398 | 4Y | 1.14 | 0.90 | 1.11 | 0.29 | Comparative Example |
| D16 | 4E | 0.692 | 0.754 | 0.724 | 0.731 | 0.95 | 1.03 | 0.99 | 0.9385 | 4R | 0.95 | 1.03 | 0.99 | 0.21 | Comparative Example |
| D17 | 4J | 0.733 | 0.947 | 0.833 | 0.865 | 0.85 | 1.09 | 0.96 | 0.8265 | 4Z | 1.01 | 1.00 | 0.98 | 0.29 | Comparative Example |

EP 4 316 685 A1

25

[Table 8]

| Die | Die diameter | | | Target diameter | D0/D | D45/D | D90/D |
|---|---|---|---|---|---|---|---|
| | D0 | D45 | D90 | D | | | |
| | (mm) | (mm) | (mm) | (mm) | | | |
| 4R | 120 | 120 | 120 | 120 | 1 | 1 | 1 |
| 4S | 127.8 | 115.8 | 121.2 | 120 | 1.065 | 0.965 | 1.01 |
| 4T | 130.8 | 114 | 122.4 | 120 | 1.09 | 0.95 | 1.02 |
| 4U | 124.8 | 115.2 | 121.2 | 120 | 1.04 | 0.96 | 1.01 |
| 4V | 123.6 | 117.6 | 120 | 120 | 1.03 | 0.98 | 1 |
| 4W | 135 | 112.8 | 122.4 | 120 | 1.125 | 0.94 | 1.02 |
| 4X | 139.2 | 111.6 | 121.2 | 120 | 1.16 | 0.93 | 1.01 |
| 4Y | 142.8 | 110.4 | 122.4 | 120 | 1.19 | 0.92 | 1.02 |
| 4Z | 142.8 | 109.2 | 122.4 | 120 | 1.19 | 0.91 | 1.02 |

[Brief Description of the Reference Symbols]

21 Stator core
22 Core back
23 Teeth
30 Rotor core
31 Rotor core
32 Magnet
50 Case
60 Shaft
100, 102, 104 Male die
110 Non-grain-oriented electrical steel sheet

**Claims**

1. A non-grain-oriented electrical steel sheet comprising a silicon steel sheet as a base material,

   wherein the silicon steel sheet has a predetermined mechanical property depending on a direction with respect to a rolling direction, and
   wherein the difference between a maximum value and a minimum value of diameters of circular holes after punching with a substantially circular die is 0.20% or less of the average value of the maximum value and the minimum value.

2. The non-grain-oriented electrical steel sheet according to claim 1,
   wherein the predetermined mechanical property satisfies the following Formula (1) when the Young's modulus of the silicon steel sheet in the rolling direction is defined as E0, the Young's modulus in the direction perpendicular to the rolling direction is defined as E90, and the Young's modulus in the direction 45 degrees from the rolling direction is defined as E45:

$$0.8100 \leq (E0+E90)/(2 \times E45) \leq 1.0000 \ldots (1)$$

3. The non-grain-oriented electrical steel sheet according to claim 1 or 2,
   wherein the predetermined mechanical property satisfies the following Formula (2) when the r value of the silicon steel sheet in the rolling direction is defined as r0, the r value in the direction perpendicular to the rolling direction is defined as r90, and the r value in the direction 45 degrees from the rolling direction is defined as r45:

$$1.0000 \leq (r0+r90)/(2 \times r45) \leq 1.3100 \ldots (2)$$

4. The non-grain-oriented electrical steel sheet according to any one of claims 1 to 3,
   wherein the predetermined mechanical property satisfies the following Formula (3) when the n value of the silicon steel sheet in the rolling direction is defined as n0, the n value in the direction perpendicular to the rolling direction is defined as n90, and the n value in the direction 45 degrees from the rolling direction is defined as n45:

$$0.8100 \leq (n0+n90)/(2 \times n45) \leq 1.0000 \ldots (3)$$

5. The non-grain-oriented electrical steel sheet according to any one of claims 1 to 4,
   wherein the predetermined mechanical property satisfies the following Formula (4) when the yield ratio of the silicon steel sheet in the rolling direction is defined as YR0, the yield ratio in the direction perpendicular to the rolling direction is defined as YR90, and the yield ratio in the direction 45 degrees from the rolling direction is defined as YR45:

$$0.8300 \leq (YR0+YR90)/(2 \times YR45) \leq 1.0300 \ldots (4)$$

6. The non-grain-oriented electrical steel sheet according to any one of claims 1 to 5,

   wherein the base material has a chemical composition, including, in mass%,
   C: 0.0010 to 0.0040%,
   Si: 2.5 to 4.5%,
   Al: 0.2 to 2.5%,
   Mn: 0.1 to 3.5%,
   P: more than 0% and 0.10% or less,
   S: 0 to 0.0030%,
   N: 0 to 0.0030%,
   Ti: 0 to 0.0030%,
   Mo: 0.0010 to 0.10%,
   Cr: 0 to 0.10%,
   B: 0 to 0.0010%,
   Ni: 0 to 0.50%,
   Cu: 0 to 0.50%,
   Sn: 0 to 0.20%,
   Sb: 0 to 0.20%,
   Ca: 0 to 0.0050%,
   La: 0 to 0.0050%,
   Ce: 0 to 0.0050%,
   O: 0 to 0.10%,
   V: 0 to 0.10%,
   W: 0 to 0.10%,
   Zr: 0 to 0.10%,
   Nb: 0 to 0.10%,
   Mg: 0 to 0.10%,
   Bi: 0 to 0.10%,
   Nd: 0 to 0.10%, and
   Y: 0 to 0.10%

   with the remainder consisting of Fe and impurities.

7. A method for punching a non-grain-oriented electrical steel sheet including a silicon steel sheet as a base material using a substantially cylindrical die, comprising
   based on a mechanical property value of the silicon steel sheet corresponding to a direction with respect to a rolling direction of the silicon steel sheet, determining the diameter of the die in the direction with respect to the rolling direction and punching out the silicon steel sheet.

8. The method for punching a non-grain-oriented electrical steel sheet according to claim 7, wherein, when the Young's modulus of the silicon steel sheet in the rolling direction is defined as E0, the Young's modulus in the direction perpendicular to the rolling direction is defined as E90, the Young's modulus in the direction 45 degrees from the rolling direction is defined as E45, and Eave=(E0+2×E45+E90)/4 is defined, the following Formula (5) is satisfied when the target diameter of the outer circumference circle of the punched product after punching with the die is D and the diameter of the die is Di:

$$0.96 < (Ei/Eave) \times (Di/D) \leq 1.04 \ldots (5)$$

where, in Formula (5), i=0, 45, 90, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

9. The method for punching a non-grain-oriented electrical steel sheet according to claim 7, wherein, when the r value of the silicon steel sheet in the rolling direction is defined as r0, the r value in the direction perpendicular to the rolling direction is defined as r90, the r value in the direction 45 degrees from the rolling direction is defined as r45, and rave=(r0+2×r45+r90)/4 is defined, the following Formula (6) is satisfied when the target diameter of the outer circumference circle of the punched product after punching with the die is D, and the diameter of the die is Di:

$$0.96 < (ri/rave) \times (Di/D) \leq 1.04 \ldots (6)$$

where, in Formula (6), i=0, 45, 90, D0 is the diameter of the die corresponding to the rolling direction, D45 is the diameter of the die corresponding to the direction 45 degrees from the rolling direction, and D90 is the diameter of the die corresponding to the direction perpendicular to the rolling direction.

10. The method for punching a non-grain-oriented electrical steel sheet according to claim 7, wherein, when the n value of the silicon steel sheet in the rolling direction is defined as n0, the n value in the direction perpendicular to the rolling direction is defined as n90, the n value in the direction 45 degrees from the rolling direction is defined as n45, and nave=(n0+2×n45+n90)/4 is defined, the following Formula (7) is satisfied when the target diameter of the outer circumference circle of the punched product after punching with the die is D and the diameter of the die is Di:

$$0.96 < (ni/nave) \times (Di/D) \leq 1.04 \ldots (7)$$

where, in Formula (7), i=0, 45, 90, D0 is the diameter of the die corresponding to the rolling direction, D45 is the diameter of the die corresponding to the direction 45 degrees from the rolling direction, and D90 is the diameter of the die corresponding to the direction perpendicular to the rolling direction.

11. The method for punching a non-grain-oriented electrical steel sheet according to claim 7, wherein, when the yield ratio of the silicon steel sheet in the rolling direction is defined as YR0, the yield ratio in the direction perpendicular to the rolling direction is defined as YR90, the yield ratio in the direction 45 degrees from the rolling direction is defined as YR45, and YRave=(YR0+2×YR45+YR90)/4 is defined, the following Formula (8) is satisfied when the target diameter of the outer circumference circle of the punched product after punching with the die is D and the diameter of the die is Di:

$$0.96 \leq (YRi/YRave) \times (Di/D) \leq 1.04 \ldots (8)$$

where, in Formula (8), i=0, 45, 90, D0 is the diameter of the die corresponding to the rolling direction, D45 is the diameter of the die corresponding to the direction 45 degrees from the rolling direction, and D90 is the diameter of the die corresponding to the direction perpendicular to the rolling direction.

**12.** The method for punching a non-grain-oriented electrical steel sheet according to any one of claims 7 to 11,

wherein the base material has a chemical composition, including, in mass%,
C: 0.0010 to 0.0040%,
Si: 2.5 to 4.5%,
Al: 0.2 to 2.5%,
Mn: 0.1 to 3.5%,
P: more than 0% and 0.10% or less,
S: 0 to 0.0030%,
N: 0 to 0.0030%,
Ti: 0 to 0.0030%,
Mo: 0.0010 to 0.10%,
Cr: 0 to 0.10%,
B: 0 to 0.0010%,
Ni: 0 to 0.50%,
Cu: 0 to 0.50%,
Sn: 0 to 0.20%,
Sb: 0 to 0.20%,
Ca: 0 to 0.0050%,
La: 0 to 0.0050%,
Ce: 0 to 0.0050%,
O: 0 to 0.10%,
V: 0 to 0.10%,
W: 0 to 0.10%,
Zr: 0 to 0.10%,
Nb: 0 to 0.10%,
Mg: 0 to 0.10%,
Bi: 0 to 0.10%,
Nd: 0 to 0.10%, and
Y: 0 to 0.10%
with the remainder consisting of Fe and impurities.

**13.** A substantially columnar die for punching a non-grain-oriented electrical steel sheet including a silicon steel sheet as a base material,
wherein the diameter of the die in a direction with respect to a rolling direction of the silicon steel sheet is determined based on a mechanical property value of the silicon steel sheet corresponding to the direction with respect to the rolling direction.

**14.** The die for punching a non-grain-oriented electrical steel sheet according to claim 13,
wherein, when the Young's modulus of the silicon steel sheet in the rolling direction is defined as E0, the Young's modulus in the direction perpendicular to the rolling direction is defined as E90, the Young's modulus in the direction 45 degrees from the rolling direction is defined as E45, and Eave=(E0+2×E45+E90)/4 is defined, the following Formula (5) is satisfied when the target diameter of the outer circumference circle of the punched product after punching with the die is D and the diameter of the die is Di:

$$0.96 < (Ei/Eave) \times (Di/D) \leq 1.04 \ldots(5)$$

where, in Formula (5), i=0, 45, 90, and when the non-grain-oriented electrical steel sheet is placed in the die, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

**15.** The die for punching a non-grain-oriented electrical steel sheet according to claim 13,
wherein, when the r value of the silicon steel sheet in the rolling direction is defined as r0, the r value in the direction perpendicular to the rolling direction is defined as r90, the r value in the direction 45 degrees from the rolling direction is defined as r45, and rave=(r0+2×r45+r90)/4 is defined, the following Formula (6) is satisfied when the target diameter of the outer circumference circle of the punched product after punching with the die is D and the diameter of the die is Di:

$$0.96 < (ri/rave) \times (Di/D) \le 1.04 \dots (6)$$

where, in Formula (6), i=0, 45, 90, and when the non-grain-oriented electrical steel sheet is placed in the die, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

16. The die for punching a non-grain-oriented electrical steel sheet according to claim 13,
    wherein, when the n value of the silicon steel sheet in the rolling direction is defined as n0, the n value in the direction perpendicular to the rolling direction is defined as n90, the n value in the direction 45 degrees from the rolling direction is defined as n45, and nave=(n0+2×n45+n90)/4 is defined, the following Formula (7) is satisfied when the target diameter of the outer circumference circle of the punched product after punching with the die is D and the diameter of the die is Di:

$$0.96 < (ni/nave) \times (Di/D) \le 1.04 \dots (7)$$

where, in Formula (7), i=0, 45, 90, and when the non-grain-oriented electrical steel sheet is placed in the die, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

17. The die for punching a non-grain-oriented electrical steel sheet according to claim 13,
    wherein, when the yield ratio of the silicon steel sheet in the rolling direction is defined as YR0, the yield ratio in the direction perpendicular to the rolling direction is defined as YR90, the yield ratio in the direction 45 degrees from the rolling direction is defined as YR45, and YRave=(YR0+2×YR45+YR90)/4 is defined, the following Formula (8) is satisfied when the target diameter of the outer circumference circle of the punched product after punching with the die is D and the diameter of the die is Di:

$$0.96 \le (YRi/YRave) \times (Di/D) \le 1.04 \dots (8)$$

where, in Formula (8), i=0, 45, 90, and when the non-grain-oriented electrical steel sheet is placed in the die, D0 is the diameter of the die corresponding to the rolling direction of the silicon steel sheet, D45 is the diameter of the die corresponding to the direction 45 degrees from the rolling direction, and D90 is the diameter of the die corresponding to the direction perpendicular to the rolling direction.

18. The die for punching a non-grain-oriented electrical steel sheet according to any one of claims 13 to 17,

    wherein the base material has a chemical composition, including, in mass%,
    C: 0.0010 to 0.0040%,
    Si: 2.5 to 4.5%,
    Al: 0.2 to 2.5%,
    Mn: 0.1 to 3.5%,
    P: more than 0% and 0.10% or less,
    S: 0 to 0.0030%,
    N: 0 to 0.0030%,
    Ti: 0 to 0.0030%,
    Mo: 0.0010 to 0.10%,
    Cr: 0 to 0.10%,
    B: 0 to 0.0010%,
    Ni: 0 to 0.50%,
    Cu: 0 to 0.50%,
    Sn: 0 to 0.20%,
    Sb: 0 to 0.20%,

Ca: 0 to 0.0050%,
La: 0 to 0.0050%,
Ce: 0 to 0.0050%,
O: 0 to 0.10%,
V: 0 to 0.10%,
W: 0 to 0.10%,
Zr: 0 to 0.10%,
Nb: 0 to 0.10%,
Mg: 0 to 0.10%,
Bi: 0 to 0.10%,
Nd: 0 to 0.10%, and
Y: 0 to 0.10%

with the remainder consisting of Fe and impurities.

FIG. 1

FIG. 2

## INTERNATIONAL SEARCH REPORT

| International application No. |
| --- |
| **PCT/JP2022/015938** |

| A. | CLASSIFICATION OF SUBJECT MATTER |
| --- | --- |

***B21D 28/02***(2006.01)i; ***C21D 8/12***(2006.01)i; ***H02K 15/02***(2006.01)i; ***C22C 38/00***(2006.01)i; ***C22C 38/06***(2006.01)i; ***H01F 1/147***(2006.01)i

FI:    B21D28/02 B; H02K15/02 E; C22C38/06; H01F1/147 175; C21D8/12 A; C22C38/00 303U

According to International Patent Classification (IPC) or to both national classification and IPC

| B. | FIELDS SEARCHED |
| --- | --- |

Minimum documentation searched (classification system followed by classification symbols)

B21D28/02; C21D8/12; H02K15/02; C22C38/00; C22C38/06; H01F1/147

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT | |
| --- | --- | --- |
| Category* | Citation of document, with indication, where appropriate, of the relevant passages | Relevant to claim No. |
| X | JP 2018-3049 A (NIPPON STEEL & SUMITOMO METAL CORP) 11 January 2018 (2018-01-11) | 1, 6 |
| | paragraphs [0015]-[0016], [0023], [0044], [0047], [0053]-[0054] | |
| Y | paragraphs [0015]-[0016], [0023], [0044], [0047], [0053]-[0054] | 2-5 |
| A | paragraphs [0015]-[0016], [0023], [0044], [0047], [0053]-[0054] | 7-18 |
| Y | JP 2010-284063 A (TOYOTA MOTOR CORP) 16 December 2010 (2010-12-16) | 2-5 |
| | paragraph [0027] | |
| A | paragraph [0027] | 1, 6-18 |
| Y | JP 2004-225132 A (NIPPON STEEL CORP) 12 August 2004 (2004-08-12) | 3-5 |
| | paragraphs [0016], [0019], [0032]-[0045], [0051], [0099] | |
| A | paragraphs [0016], [0019], [0032]-[0045], [0051], [0099] | 1-2, 6-18 |
| Y | JP 2019-502822 A (TATA STEEL IJMUIDEN BV) 31 January 2019 (2019-01-31) | 4-5 |
| | paragraphs [0016], [0046], [0107], [0137]-[0138] | |
| A | paragraphs [0016], [0046], [0107], [0137]-[0138] | 1-3, 6-18 |

☑ Further documents are listed in the continuation of Box C.          ☑ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **26 May 2022** | **14 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/015938**

### C.    DOCUMENTS CONSIDERED TO BE RELEVANT

| Category* | Citation of document, with indication, where appropriate, of the relevant passages | Relevant to claim No. |
|---|---|---|
| X | JP 2003-197414 A (JFE STEEL KK) 11 July 2003 (2003-07-11)<br>paragraphs [0002], [0007]-[0008], [0030]-[0048] | 7, 12-13, 18 |
| A | paragraphs [0002], [0007]-[0008], [0030]-[0048] | 1-6, 8-11, 14-17 |

Form PCT/ISA/210 (second sheet) (January 2015)

## INTERNATIONAL SEARCH REPORT
### Information on patent family members

International application No.

**PCT/JP2022/015938**

| Patent document cited in search report | | | Publication date (day/month/year) | Patent family member(s) | Publication date (day/month/year) |
|---|---|---|---|---|---|
| JP | 2018-3049 | A | 11 January 2018 | (Family: none) | |
| JP | 2010-284063 | A | 16 December 2010 | (Family: none) | |
| JP | 2004-225132 | A | 12 August 2004 | (Family: none) | |
| JP | 2019-502822 | A | 31 January 2019 | US 2018/0363082 A1 paragraphs [0016], [0061], [0141], [0170]-[0171] EP 3390040 A1 CN 108367539 A KR 10-2018-0095536 A MX 2018007185 A BR 112018011831 A2 | |
| JP | 2003-197414 | A | 11 July 2003 | (Family: none) | |

Form PCT/ISA/210 (patent family annex) (January 2015)

36

**EP 4 316 685 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021061846 A
- JP 2021099782 A
- JP H1024333 A